(19) Europäisches Patentamt
European Patent Office
Office européen des brevets

(11) Veröffentlichungsnummer : **0 068 246**
**B1**

(12) # EUROPÄISCHE PATENTSCHRIFT

(45) Veröffentlichungstag der Patentschrift : **30.10.85**

(51) Int. Cl.[4] : **C 08 G 73/10**, B 29 C 43/00

(21) Anmeldenummer : **82105146.3**

(22) Anmeldetag : **12.06.82**

(54) **Verfahren zur Herstellung von pulverförmigem Polyimid und seine Verwendung.**

(30) Priorität : **22.06.81 DE 3124401**

(43) Veröffentlichungstag der Anmeldung : **05.01.83 Patentblatt 83/01**

(45) Bekanntmachung des Hinweises auf die Patenterteilung : **30.10.85 Patentblatt 85/44**

(84) Benannte Vertragsstaaten : **BE DE FR GB IT NL**

(56) Entgegenhaltungen :
**DE-A- 715 666**
**DE-A- 2 159 935**
**US-A- 4 075 171**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Reiter, Udo, Dr.**
**Pfalzring 166**
**D-6704 Mutterstadt (DE)**
Erfinder : **Kovacs, Jenoe, Dr.**
**Robert-Koch-Strasse 18**
**D-6712 Bobenheim-Roxheim (DE)**
Erfinder : **Schenck, Hans-Uwe, Dr.**
**Erlenweg 6**
**D-6706 Wachenheim (DE)**

**EP 0 068 246 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von pulverförmigem Polyimid und dessen Verwendung.

Es ist bekannt, daß man Lösungen von aromatischen Polyamidsäuren in dipolaren aprotischen Lösungsmitteln herstellen kann. Die Überführung der Polyamidsäure (= PAS) in das entsprechende Polyimid (= PI) kann durch Erhitzen auf > 50 °C (DE-OS 1 904 988) geschehen oder durch Erhitzen auf > 50 °C unter gleichzeitiger Umsetzung mit Acetanhydrid/Pyridin (DE-AS 1 198 547, DE-AS 1 202 981). Bei einem anderen Verfahren wird die Polyamidsäurelösung mit Lösungsmittel verdünnt und in Methanol (oder Wasser) gefällt. Das gefällte Pulver wird beim Trocknen in das Polyimid überführt (US-PS 3 422 061). Alle diese Verfahren weisen jedoch beträchtliche Nachteile auf. So sind meistens, wie bei der Fällungsmethode, sehr große Lösungsmittelmengen notwendig. Das Herauswaschen von Lösungsmittelresten aus den gefällten Pulvern muß sehr sorgfältig ausgeführt werden und ist somit sehr aufwendig, da auch geringste Mengen, die im Pulver verbleiben, beim späteren Verarbeitungsprozeß stören. Beim Erhitzen der PAS im Lösungsmittel auf Temp. > 50 erhält man Polyimidpulver mit nur ungenügendem Molekulargewicht. Die Verwendung von Acetanhydrid/Pyridin ist kostspielig und aufwendig.

Aufgabe der vorliegenden Erfindung ist es, ein Verfahren zur Herstellung von pulverförmigen Polyimiden aufzuzeigen, das diese Nachteile nicht aufweist.

Gegenstand der vorliegenden Erfindung ist ein Verfahren zur Herstellung von pulverförmigem Polyimid aus einer nach einem üblichen Verfahren erhaltenen Polyamidsäurelösung, das dadurch gekennzeichnet ist, daß man in einem aprotischen dipolaren organischen Lösungsmittel gelöste, bei Temperaturen von etwa 0 bis 40 °C hergestellte, aromatische Polyamidsäure einer inherenten Viskosität von 1,5 bis 2,5 dl/g mit einem Schleppmittel für Wasser vermischt, das Gemisch auf die Siedetemperatur des Schleppmittels erhitzt, das entstehende Wasser azeotrop abdestilliert und das ausgefallene Polyimidpulver abfiltriert sowie gegebenenfalls wäscht und trocknet.

Gegenstand der vorliegenden Erfindung ist außerdem die Verwendung dieser Polyimidpulver zur Herstellung von Formkörpern durch Hochdrucksintern.

Es war überraschend, daß sich durch den erfindungsgemäßen Einsatz von Schleppmittel für Wasser die Ringschlußreaktion der Polyamidsäure zu Polyimid in so vorteilhafter Weise durchführen läßt. Das entstehende Wasser wird azeotrop abdestilliert und man erhält ein feinteiliges Polyimidpulver, das sich seht gut weiterverarbeiten läßt.

Zu den für das erfindungsgemäße Verfahren zu verwendenden Aufbaukomponenten ist im einzelnen folgendes auszuführen.

Die aromatische Polyamidsäure kann nach einem üblichen Verfahren aus Dianhydriden aromatischer Tetracarbonsäuren und aromatischen diprimären Diaminen erhalten werden.

Als Dianhydride aromatischer Tetracarbonsäuren kommen solche der allgemeinen Formel

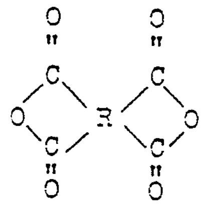

in Betracht, worin R ein vierwertiger Rest ist, der wenigstens einen aromatisch ungesättigten Kohlenstoffsechsring enthält, die vier Carbonylgruppen direkt an verschiedenen Kohlenstoffatomen gebunden sind und jedes Carbonylgruppenpaar an benachbarte Kohlenstoffatome in einem sechsgliedrigen aromatisch ungesättigten Ring der Reste R gebunden ist, beispielsweise Pyromellitsäuredianhydrid, 2,3,6,7-Naphthalintetracarbonsäuredianhydrid, 3,3',4,4'-Diphenyltetracarbonsäuredianhydrid, 1,2,5,6-Naphthalintetracarbonsäuredianhydrid, 2,2',3,3'-Diphenyltetracarbonsäuredianhydrid, 2,2-Bis-(3,4-dicarboxyphenyl)-propandianhydrid, Bis-(3,4-dicarboxyphenyl)-sulfondianhydrid, Bis-(3,4-dicarboxyphenyl)-etherdianhydrid, 2,2-Bis-(2,3-dicarboxyphenyl)-propan-dianhydrid, 1,1-Bis-(2,3-dicarboxyphenyl)-ethandianhydrid, 1,1-Bis(3,4-dicarboxyphenyl)-ethandianhydrid, Bis-(2,3-dicarboxyphenyl)-methandianhydrid, Bis-(3,4-dicarboxyphenyl)-methandianhydrid, 3,43',4'-Benzophenontetracarbonsäuredianhydrid oder Mischungen davon.

Bevorzugt sind Pyromellitsäuredianhydrid und Benzophenontetracarbonsäuredianhydrid.

Als aromatische diprimäre Diamine kommen solche der allgemeinen Formel $H_2N—R'—NH_2$ in Frage, worin R' fur einen zweiwertigen polycyclischen aromatischen Rest steht. Beispiele für solche Reste R' sind

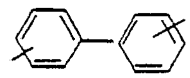

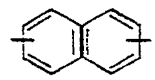

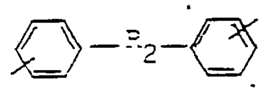

oder

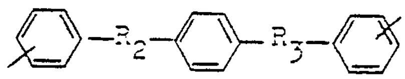

wobei $R_2$ und $R_3$ aus den Resten ausgewählt sind, die aus Kohlenstoff in Alkylenketten mit 1 bis 3 Kohlenstoffatomen, Sauerstoff oder Schwefel allein oder in $-SO_2-$ besteht. Solche Diamine sind beispielweise 4,4'-Diaminodiphenylpropan, 4,4'-Diaminodiphenylmethan, 4,4'-Diaminodiphenylamin, Benzidin, 4,4'-Diaminodiphenylsulfid, 4,4'-Diaminodiphenylsulfon, 3,3'-Diaminodiphenylsulfon, 4,4'-Diaminodiphenylether, Bis-(4-aminophenyl)-diethylsilan, Bis-(4-aminophenyl)-phenylphosphinoxid, Bis-(4-aminophenyl)-N-methylamin, 1,5-Diaminonaphthalin, 3,3'-Dimethyl-4,4'-diaminobiphenyl, 3,3'-Dimethoxybenzidin, 1,4-Bis-(p-aminophenoxy)-benzol, 1,3-Bis-(p-aminophenoxy)-benzol oder Mischungen davon.

Bevorzugte Diamine sind Diaminodiphenylmethan und Diaminodiphenyloxid.

Als aprotische dipolare organische Lösungsmittel, in denen die Polyamidsäuren zweckmäßigerweise hergestellt und gelöst sind, kommen beispielsweise N,N-Dimethylacetamid, sowie insbesondere N,N-Dimethylformamid, N-Methylpyrrolidon und Dimethylsulfoxid sowie deren Gemische in Betracht, die im allgemeinen in Mengen von 95 bis 75, vorzugsweise 90 bis 80 Gew.-%, bezogen auf die Lösung, eingesetzt werden. Die Dianhydride der aromatischen Tetracarbonsäuren werden mit den aromatischen diprimären Diaminen im allgemeinen in äquimolaren Mengen miteinander zu den Polyamidsäuren umgesetzt.

Die Herstellung der Polyamidsäurelösungen kann besonders vorteilhaft in der Weise erfolgen, daß man bei Temperaturen von etwa 0 bis 30 °C zu einer Lösung des aromatischen diprimären Diamins in einem dipolaren aprotischen organischen Lösungsmittel zunächst etwa 90 bis 95 Äquivalent-% des Dianhydrids der aromatischen Tetracarbonsäure zugibt und nach Abklingen der Reaktion bei Temperaturen von etwa 0 °C bis 40 °C so lange portionsweise (z. B. jeweils 2,5 Äquivalent-%) Dianhydrid der Tetracarbonsäure zudosiert, bis eine inherente Viskosität von 1,5 bis 2,5 dl/g erreicht ist.

Erfindungsgemäß wird zur Polyamidsäurelösung ein Schleppmittel für Wasser zugegeben, das so erhaltene Gemisch auf die Siedetemperatur des Schleppmittels erhitzt und das bei der Umwandlung der Polyamidsäure in Polyimid, das dabei ausfällt, entstehende Wasser azeotrop abdestilliert.

Es ist vorteilhaft, das abdestillierte Schleppmittel in einem üblichen Wasserabscheider vom Wasser abzutrennen und wieder dem Reaktionsgemisch zuzuführen, das Wasser also auszukreisen.

Als Schleppmittel eignen sich die üblichen Schleppmittel für Wasser, insbesondere aromatische Kohlenwasserstoffe, wie Benzol, Toluol, Xylol sowie Halogenkohlenwasserstoffe, wie Chlorbenzol. Besonders bevorzugte Schleppmittel sind Toluol und Xylol. Die Schleppmittel werden im allgemeinen in Mengen von 10 bis 40, vorzugsweise 15 bis 25 Gew.-%, bezogen auf die Lösung, eingesetzt.

Das nach dem erfindungsgemäßen Verfahren erhaltene Polyimid fällt als feines Pulver aus, das abfiltriert, gegebenenfalls mit Methanol/Wasser-Gemisch gewaschen und schließlich getrocknet wird.

Die Trocknung kann in zwei Stufen erfolgen : Zunächst eine Vortrocknung bei 100 bis 150 °C (12 Stunden), anschließend 2 Stunden bei 250 bis 300 °C, wobei gegebenenfalls auch unter vermindertem Druck gearbeitet werden kann.

Die Polyimidpulver weisen inherente Viskositäten (gemessen in 0,5 %ig in Konz. $H_2SO_4$) zwischen 0,6 und 1,2 und Schüttdichten von ca. 200 bis 300 g/l auf.

Die erfindungsgemäß erhaltenen Polyimidpulver zeichnen sich dadurch aus, daß sie sich hervorragend durch Sintern, besonders vorteilhaft durch Hochdrucksintern, zu Formkörpern verarbeiten lassen.

Die Formkörper die aus Pulver mit hohen inherenten Viskositäten hergestellt werden — diese werden nach dem beanspruchten Verfahren besonders vorteilhaft erhalten — weisen in Bezug auf die Reißdehnung besonders guten Eigenschaften aus.

Die im Beispiel genannten Teile und Prozente sind soweit nicht anders angegeben Gewichtsteile bzw. Gewichtsprozente.

Beispiel

80 Teile Diaminodiphenyloxid und 1 000 Teile N-Methylpyrrolidon (= NMP) werden in ein heiz- und kühlbares Reaktionsgefäß, das mit einem Rührer, Wasserabscheider Rückflußkühler und $N_2$-Einleitungsrohr versehen ist, eingefüllt. Dazu gibt man 122,4 Teile Benzophenontetracarbonsäuredianhydrid (= BTDA) gelöst in 183 Teilen NMP. Nach Beendigung der Reaktion gibt man 2 × 3,21 Teile BTDA (2,5 Mol.-%) hinzu und verfolgt durch Messung den Viskositätsanstieg. Die Lösungsviskosität beträgt dann 34 655 mPa.s, was einer inherenten Viskosität $\eta_{inh.}$ = 1,62 dl/g entspricht. Zu der hochviskosen Lösung gibt man anschließend 280 Teile Xylol und erhitzt 4 Stunden lang auf 170 °C, wobei das entstehende Wasser aus der Reaktionsmischung azeotrop entfernt wird. Das ausgefallene Polyimid wird abfiltriert, einmal in Methanol/$H_2O$ (1 : 1) gewaschen, bei 150 °C (12 Stunden) und bei 300 °C (2 Stunden) getrocknet. Das Schüttgewicht beträgt 240 g/l. Die inherente Viskosität $\eta_{inh.}$ = 1,15 dl/g. Das Pulver läßt sich durch Hochdrucksintern (Sinterdruck 6 250 kg/cm$^2$, Sintertemperatur 360 °C) zu Formkörpern verarbeiten, die folgende Eigenschaften aufweisen :

Reiß-Dehnung $\varepsilon_B = \varepsilon_R$ = 2,6 % ;
Kerbschlagzähigkeit 2,64 Nmm/m$^2$
Härte H 30 = 294 N/mm$^2$ ;
E-Modul 4 870 N/mm$^2$ ;

Vergleichsbeispiel

Das Beispiel der DE-OS-19 04 988 wurde genau nachgearbeitet. Das dabei erhaltene Pulver wies eine inherente Viskosität von 0,357 dl/g (0,5 %ig in Konz. $H_2SO_4$) auf und ließ sich durch Hochdrucksintern (Sinterdruck 6 250 kg/cm$^2$, Sintertemperatur 380 °C) nicht zu kompakten Formkörpern verarbeiten.

**Patentansprüche**

1. Verfahren zur Herstellung von pulverförmigem Polyimid aus einer nach einem üblichen Verfahren erhaltenen Polyamidsäurelösung, dadurch gekennzeichnet, daß man in einem aprotischen dipolaren organischen Lösungsmittel gelöste, bei Temperaturen von etwa 0 bis 40 °C hergestellte, aromatische Polyamidsäure einer inherenten Viskosität von 1,5 bis 2,5 dl/g mit einem Schleppmittel für Wasser vermischt, das Gemisch auf die Siedetemperatur des Schleppmittels erhitzt, das entstehende Wasser azeotrop abdestilliert und das ausgefallene Polyimidpulver abfiltriert sowie gegebenenfalls wäscht und trocknet.

2. Verfahren nach Anspruch 1, dadurch gekennzeichnet, daß als aromatische Polyamidsäure ein Umsetzungsprodukt aus einem Dianhydrid einer aromatischen Tetracarbonsäure und einem aromatischen diprimären Amin verwendet wird.

3. Verfahren nach Anspruch 1 oder 2, dadurch gekennzeichnet, daß als Schleppmittel ein aromatischer Kohlenwasserstoff verwendet wird.

4. Verwendung des nach einem Verfahren gemäß einem der vorhergehenden Ansprüche hergestellten Polyimidpulvers zur Herstellung von Formkörpern durch Hochdrucksintern.

**Claims**

1. A process for the preparation of polyimide powder from a conventionally obtained polyamido-acid solution, wherein an aromatic polyamido-acid which has an intrinsic viscosity of from 1.5 to 2.5 dl/g, has been prepared at a temperature of from about 0 to 40 °C, and is dissolved in an aprotic dipolar organic solvent is mixed with a water-entraining agent, the mixture is heated to the boiling point of the entraining agent, the water formed is distilled off azeotropically and the polyimide powder which precipitates is filtered off and, if desired, washed and dried.

2. A process as claimed in claim 1, wherein the aromatic polyamido-acid used is a reaction product of a dianhydride of an aromatic tetracarboxylic acid with an aromatic di-primary amine.

3. A process as claimed in claim 1 or 2, wherein the entraining agent used is an aromatic hydrocarbon.

4. The use of the polyimide powder obtained by a process as claimed in any of the preceding claims for the production of moldings by high-pressure sintering.

**Revendications**

1. Procédé de préparation d'un poly-imide pulvérulent à partir d'une solution d'un acide polyamidique préparé par un procédé usuel, caractérisé en ce que l'on ajoute à la solution dans un solvant organique dipolaire aprotique d'un acide poly-amidique aromatique, préparé entre environ 0 et 40 °C,

d'une viscosité inhérente comprise entre 1,5 et 2,5 dl/g, un agent d'entraînement de l'eau, on porte ce mélange à la température d'ébullition de l'agent d'entraînement et on sépare l'eau formée par une distillation azéotrope et le poly-imide pulvérulent précipité par filtration, le poly-imide pouvant éventuellement être lavé et séché.

2. Procédé suivant la revendication 1, caractérisé en ce que l'acide poly-amidique aromatique est le produit de la réaction d'un di-anhydride d'un acide tétra-carboxylique aromatique et d'une amine aromatique di-primaire.

3. Procédé suivant la revendication 1 ou 2, caractérisé en ce que l'agent d'entraînement est un hydrocarbure aromatique.

4. Utilisation d'un poly-imide pulvérulent, préparé par le procédé suivant l'une des revendications précédentes, pour la fabrication d'éléments façonnés par un frittage sous pression élevée.